# EUROPÄISCHE PATENTSCHRIFT

(11) **EP 1 374 003 B1**
(45) Veröffentlichungstag und Bekanntmachung des Hinweises auf die Patenterteilung: **01.06.2005**
(21) Anmeldenummer: 02727418.2
(22) Anmeldetag: 14.03.2002
(51) Int. Cl.: G05D 7/01

(54) **EINSETZPATRONE FÜR EINE FLÜSSIGKEITSLEITUNG**
CARTRIDGE INSERT FOR A FLUID LINE
CARTOUCHE POUR UN CIRCUIT HYDRAULIQUE

(30) Priorität: 22.03.2001 DE 10114261
(43) Veröffentlichungstag der Anmeldung: 02.01.2004
(73) Patentinhaber: Neoperl GmbH, 79379 Müllheim (DE)
(72) Erfinder: WEIS, Christoph, 79379 Müllheim (DE); ZOLLER, Uwe, 79379 Mülheim (DE)
(74) Vertreter: Maucher W., Dipl.-Ing.
(86) Internationale Anmeldenummer: PCT/EP2002/002869
(87) Internationale Veröffentlichungsnummer: WO 2002/077736

(56) Entgegenhaltungen:
- DE-A- 3 222 548
- DE-A- 3 410 186

## Beschreibung

Die Erfindung betrifft eine Einsetzpatrone zum Einsetzen in eine Flüssigkeitsleitung, die in ihrem Patronengehäuse wenigstens einen Rückflußverhinderer und abströmseitig zumindest einen Durchflußmengenregler aufweist, wobei der Rückflußverhinderer einen Schließkörper hat, der in seiner Schließstellung an einem Ventilsitz des Patronengehäuses dicht anliegt und von dieser Schließstellung gegen eine Rückstellkraft in eine Offenstellung bewegbar ist, wobei am Schließkörper ein abströmseitiger Führungszapfen vorsteht, der in der Führungsöffnung eines zentralen Reglerkerns des Durchflußmengenreglers geführt ist und wobei der Durchflußmengenregler einen den Reglerkern umgreifenden Regelkörper aus elastischem Material aufweist, der auf einer Ringschulter oder dergleichen Regelkörper-Träger aufliegt und zwischen sich und einer gegenüberliegenden Umfangswand einen sich druckabhängig verändernden Steuerspalt begrenzt.

Solche Einsetzpatronen werden beispielsweise in sanitäre Wasserleitungen eingesetzt, um ein unerwünschtes Rückströmen insbesondere von Brauchwasser zu vermeiden und um gleichzeitig die Durchflußmenge pro Zeiteinheit auch bei Druckschwankungen im Wasserleitungsnetz vergleichmäßigen zu können.
So ist beispielsweise eine Einsetzpatrone der eingangs erwähnten Art bekannt, die ein zweiteiliges Patronengehäuse hat. Während in dem zuströmseitigen Gehäuseteil der Rückflußverhinderer vorgesehen ist, weist das damit lösbar verrastbare abströmseitige Gehäuseteil den Durchflussmengenregler auf. Der Durchflußmengenregler ist dreiteilig ausgestaltet und hat einen zentralen Reglerkern, den ein Regelkörper aus elastischem Material umgreift. Dieser Regelkörper, der zwischen sich und der Umfangswand des Reglerkerns einen sich druckabhängig verändernden Steuerspalt begrenzt, liegt auf einer Ringschulter auf, die am abströmseitigen Stirnrandbereich des Patronengehäuses radial nach innen vorsteht.

Bei dieser vorbekannten Einsetzpatrone -siehe z.B. die veröffentliche PCT Anmeldung WO-A-98/38393- ist der am Schließkörper abströmseitig vorstehende Führungszapfen in einer Führungsöffnung des zentralen Reglerkerns geführt. Da der Reglerkern zum einen als Führungsmittel für den Schließkörper dient, zum anderen aber auch den Steuerspalt des Durchflußmengenreglers begrenzt und dazu in Längsrichtung orientierte Regelprofilierungen trägt, ist der Reglerkern derart dick und lang auszugestalten, daß er nicht unerheblich über die abströmseitige Stirnöffnung der Einsetzpatrone nach außen vorsteht.

Da der vergleichsweise dicke Reglerkern bei dieser vorbekannten Einsetzpatrone über deren Stirnöffnung vorsteht, ist es nicht immer ohne weiteres möglich, die Einsetzpatrone im Anschlußfitting einer Wasserleitung unterzubringen.

Es besteht daher insbesondere die Aufgabe, eine kostengünstig herstellbare Einsetzpatrone der eingangs erwähnten Art zu schaffen, die aufgrund ihrer kompakten Ausgestaltung zum Einbau einen geringen Platzbedarf hat, so daß beispielsweise auch Reihenschaltungen mit weiteren Einsetzteilen auch ohne Distanzhalter möglich sind.

Die erfindungsgemäße Lösung dieser Aufgabe besteht bei der Einsetzpatrone der eingangs erwähnten Art insbesondere darin, daß der Durchflußmengenregler etwa bündig mit der Abströmseite des Patronengehäuses abschließt und das dazu die Ringschulter am Reglerkern vorsteht und der Steuerspalt zwischen dem Regelkörper und der Innenseite der Patronengehäuse-Umfangswand vorgesehen ist.

Da der Durchflußmengenregler der erfindungsgemäßen Einsetzpatrone etwa bündig mit der Abströmseite des Patronengehäuses abschließt, steht kein störender Reglerkern über die abströmseitige Stirnöffnung vor, der einen zusätzlichen Platzbedarf erfordern und den lichten Strömungsquerschnitt im Bereich eines Anschlußfittings reduzieren könnte. Bei der erfindungsgemäßen Einsetzpatrone ist der Steuerspalt des Durchflußmengenreglers zwischen dem elastischen Reglerkörper einerseits und der Innenseite der Patronengehäuse-Umfangswand andererseits vorgesehen, während die den Regelkörper abstützende Ringschulter am Reglerkern vorgesehen ist. Da der Reglerkern somit nicht zusätzlich auch die üblichen Regelprofilierungen aufweisen muß und da diese Regelprofilierungen stattdessen an der Patronengehäuse-Umfangswand angeordnet werden können, kann der Reglerkern vergleichsweise klein dimensioniert werden. Durch die kompakte Ausgestaltung der erfindungsgemäßen Einsetzpatrone ist diese mit geringem Aufwand herstellbar.

Der geringe Herstellungsaufwand und die zur Herstellung der erfindungsgemäßen Einsetzpatrone benötigte Teilezahl läßt sich reduzieren, wenn die Patronengehäuse-Umfangswand im Bereich des Durchflußmengenreglers einstückig mit dem Reglerkern verbunden ist.

Dabei sieht eine bevorzugte Ausführungsform gemäß der Erfindung vor, daß die am Reglerkern gehaltene Ringschulter über Verbindungsstege mit der Patronengehäuse-Umfangswand verbunden ist. Während der Regelkörper auf der Ringschulter aufliegt, sind zwischen den benachbarten Verbindungsstegen Durchtrittsöffnungen vorgesehen, die einen die Ringschulter umfassenden, im wesentlichen ringförmigen Durchflußkanal bilden.

Besonders vorteilhaft ist es, wenn das Patronengehäuse zumindest zweiteilig ausgestaltet ist, und im Bereich des Durchflußmengenreglers ein napfartiges Gehäuseteil aufweist, das mit einem zuströmseitig benachbarten Gehäuseteil verrastbar oder dergleichen lösbar verbindbar ist. Die zweiteilige Ausgestaltung des Patronengehäuses und die lösbare Verbindung seiner Gehäuseteile erlaubt es, die erfindungsgemäße Einsetzpatrone als Bestandteil eines Baukastensystems auszugestalten, aus dessen Komponenten unterschiedliche sanitäre Einsetzteile zusammengesetzt werden können.

Damit ein steigender Wasserdruck den elastischen ringförmigen Regelkörper gut aufweiten und damit den Steuerspalt entsprechend verengen kann, ist es zweckmäßig, wenn der Reglerkern einen dem lichten Innendurchmesser des Regelkörpers etwa entsprechenden Außendurchmesser hat.

Um den Durchflußmengenregler der erfindungsgemäßen Einsetzpatrone auf die gewünschte Durchflußmenge hin ausgestalten zu können, ist es vorteilhaft, wenn an der Innenseite der Patronengehäuse-Umfangswand in Umfangsrichtung zueinander beabstandete und in Durchflußrichtung orientierte Regulieraus- und/oder -einformungen vorgesehen sind.

Eine bevorzugte Ausführungsform, die sich durch eine besonders kompakte Ausgestaltung und eine störungsfreie Funktion auszeichnet, sieht vor, daß der Reglerkern einen Aufsteckansatz für eine den Schließkörper in Schließstellung beaufschlagende Rückstellfeder aufweist, und daß der Aufsteckansatz zur Aufnahme zumindest eines Großteils der Druckfeder in Spannlage bemessen ist. Dabei wird der störungsfreie Betrieb und die kompakte Ausgestaltung der erfindungsgemäßen Einsetzpatrone noch begünstigt, wenn der Schließkörper abströmseitig eine Ringnut zur Aufnahme des einen Endes der Druckfeder aufweist.

Um eine sichere und störungsfreie Funktion auch des Rückflußverhinderers zu gewährleisten, ist es vorteilhaft, wenn der Schließkörper im Dichtbereich eine Ringnut mit einem darin eingesetzten Dichtring aufweist und wenn der Ventilsitz sich in Schließrichtung vorzugsweise konisch verjüngt.

Die erfindungsgemäße Einsetzpatrone und ihre Einzelteile können aus allen geeigneten Materialien hergestellt werden. Um jedoch den geringen Herstellungsaufwand noch zu begünstigen, ist es vorteilhaft, wenn das gegebenenfalls mehrteilige Patronengehäuse und/oder der Schließkörper aus Kunststoff bestehen und Spritzgießteile sind.

Weitere Merkmale der Erfindung ergeben sich aus der nachfolgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: eine in einem Längsschnitt dargestellte Einsetzpatrone zum Einsetzen in eine sanitäre Wasserleitung, die in ihrem Patronengehäuse einen Rückflußverhinderer und einen abströmseitig angeordneten Durchflußmengenregler auf-weist, wobei in Fig. 1 der Durchflußverhinderer in der linken Bildhälfte in seiner Schließstellung und in der rechten Bildhälfte in seiner Offenstellung gezeigt ist,
- Fig. 2: das den Durchflußmengenregler aufweisende Gehäuseteil in einem Teil-Längsschnitt,
- Fig. 3: das Gehäuseteil aus Fig. 2 in einer Draufsicht auf die Zuström-Stirnseite, und
- Fig. 4: das den Durchflußmengenregler aufweisende Gehäuseteil aus Figur 2 und 3 in einem Teil-Längsschnitt im Bereich eines zentralen Reglerkerns.

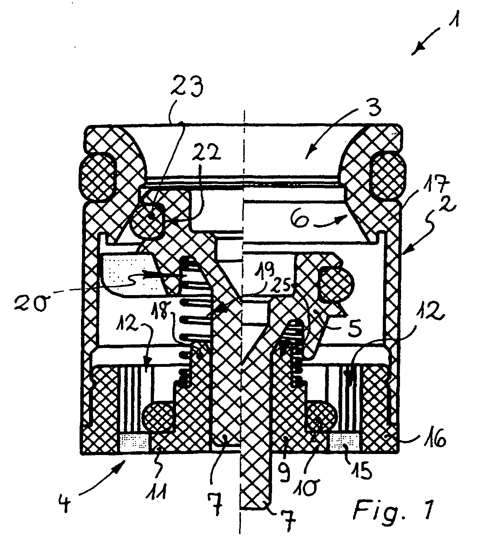

In den Fig. 1 bis 3 ist eine Einsetzpatrone 1 dargestellt, die in eine entsprechende Aussparung in einem Anschlußfitting einer sanitären Wasserleitung eingesetzt werden kann. Die Einsetzpatrone 1 weist in ihrem Patronengehäuse 2 einen Rückflußverhinderer 3 und einen abströmseitig angeordneten Durchflußmengenregler 4 auf. Während der Rückflußverhinderer 3 eine unerwünschte Rückströmung des Flüssigkeitsstroms entgegen der üblichen Durchflußrichtung verhindern soll, wird mit Hilfe des Durchflußmengenreglers 4 die Durchflußmenge des die Einsetzpatrone 1 passierenden Wasserstroms auf einen Sollwert pro Zeiteinheit festgelegt.

Der Rückflußverhinderer 3 hat, einen Schließkörper 5, der in seiner in Fig. 1 in der linken Bildhälfte dargestellten Schließstellung an einem Ventilsitz 6 des Patronengehäuses 2 dicht anliegt und von dieser Schließstellung gegen eine Rückstellkraft in eine Offenstellung bewegbar ist, welche in Fig. 1 in der rechten Bildhälfte gezeigt ist.

Aus Fig. 1 wird deutlich, daß am Schließkörper 5 des Rückflußverhinderers 3 ein abströmseitiger Führungszapfen 7 vorsteht, der in der Führungsöffnung 8 eines zentralen Reglerkerns 9 des Durchflußmengenreglers 4 geführt ist. Der Durchflußmengenregler 4 weist einen den Reglerkern 9 umgreifenden ringförmigen Regelkörper 10 aus elastischem Material auf, der auf einer Ringschulter 11 aufliegt. Diese Ringschulter 11 steht am Reglerkern 9 in radialer Richtung vor. Der Durchflußmengenregler 4 begrenzt zwischen sich und der gegenüberliegenden Patronengehäuse-Umfangswand einen sich druckabhängig verändernden Steuerspalt 12.

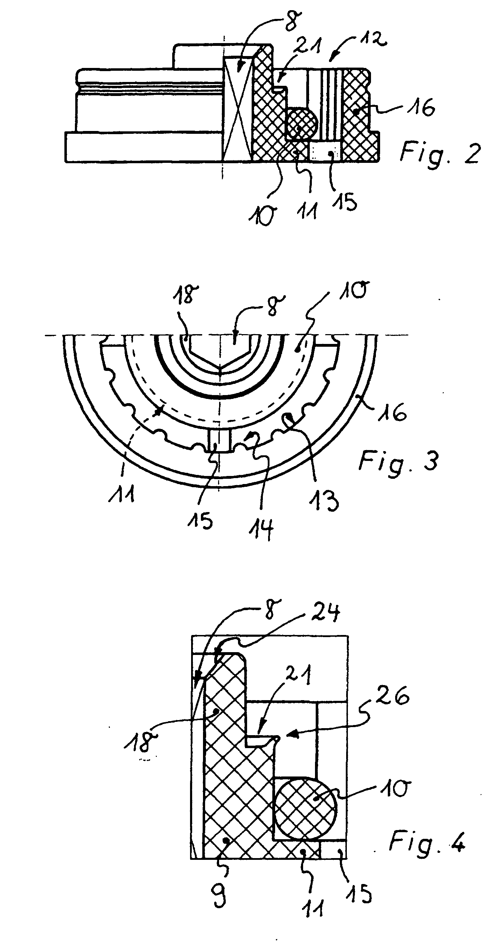

In den Fig. 2 und 3 ist zu erkennen, daß an der Patronengehäuse-Umfangswand innenseitig Regelein- und - ausformungen 13, 14 vorgesehen sind, die in ihrer Ausgestaltung an die gewünschte Durchflußmenge angepaßt sind. Da diese in Durchflußrichtung orientierten Regelprofilierungen 13, 14 an der Patronengehäuse-Umfangswand und nicht am Reglerkern 9 vorgesehen sind, kann der Reglerkern 9 mit einer vergleichsweisen kurzen Längserstreckung und einem geringen Durchmesser so ausgestaltet werden, daß der Durchflußmengenregler 4 etwa bündig mit der Abströmseite des Patronengehäuses 2 abschließt. Aufgrund dieser kompakten Ausgestaltung der Einsatzpatrone 1 kann diese in den üblichen Anschlußstutzen sanitärer Wasserleitungen untergebracht werden.

Aus den Fig. 1 und 2 ist zu erkennen, daß die Patronengehäuse-Umfangswand im Bereich des Durchflußmengenreglers 4 mit dem Reglerkern 9 einstückig verbunden ist. Die am Reglerkern 9 vorgesehene Ringschulter 11 ist dazu über speichenförmige und in Umfangsrichtung voneinander beabstandete Verbindungsstege 15 mit der Patronengehäuse-Umfangswand verbunden. Zwischen benachbarten Verbindungsstegen 15 ist jeweils eine Durchtrittsöffnung vorgesehen. Diese Durchtrittsöffnungen bilden einen koaxial zur Einsetzpatronen-Längsachse angeordneten, im wesentlichen ringförmigen Durchflußkanal.

Aus einem Vergleich der Fig. 1 einerseits und der Fig. 2 und 3 andererseits wird deutlich, daß das Patronengehäuse 2 zweiteilig ausgestaltet ist und im Bereich des Durchflußmengenreglers 4 ein napfartiges Gehäuseteil 16 aufweist, daß mit einem zuströmseitig benachbarten Gehäuseteil 17 verrastbar ist. Die hier dargestellte Einsetzpatrone 1 kann somit Bestandteil eines Baukastensystems sein, aus dessen einzelnen miteinander verbindbaren Funktionseinheiten verschiedene sanitäre Einsetzteile zusammengestellt werden können.

In den Fig. 1 und 2 wird deutlich, daß der Reglerkern 9 einen Aufsteckansatz 18 für eine den Schließkörper 5 in Schließrichtung beaufschlagende Rückstellfeder 19 hat. Dabei ist der Aufsteckansatz 18 zur Aufnahme zumindest eines Großteils der Druckfeder 19 in Spannlage bemessen. Zur Aufnahme der stirnseitigen Federenden der Rückstellfeder 19 sind sowohl abströmseitig am Schließkörper 5 als auch am Fuße des Aufsteckansatzes 18 Ringnuten 20, 21 vorgesehen. Der Reglerkern 9 weist einen Außendurchmesser auf, der etwa dem lichten Innendurchmesser des ringförmigen Regelkörpers 10 entspricht. Die Ringschulter 11 weist eine radiale Erstreckung auf, die geringfügig über den halben Ringkörper-Durchmesser reicht. Der Schließkörper 5 weist im Dichtbereich eine Ringnut 22 mit einem darin eingesetzten Dichtring 23 auf. Um die störungsfreie Funktion des Rückflußverhinderers 3 zu gewährleisten, verjüngt sich der Ventilsitz 6 in Schließrichtung etwa konisch. Die Gehäuseteile 16, 17 des Patronengehäuses 2 und vorzugsweise auch der Schließkörper 5 sind als Spritzgießteile aus Kunststoff hergestellt. Da der Durchflußmengenregler 3 der hier dargestellten Einsetzpatrone 1 im wesentlichen nur aus zwei Einzelteilen, nämlich dem Regelkörper 10 und dem Gehäuseteil 16 besteht, kann der Herstellungsaufwand für die Einsetzpatrone 1 erheblich reduziert werden.

Aus einem Vergleich der Figuren 1 und 4 wird deutlich, daß der dem Schließkörper 5 zugewandte Randbereich 24 der Führungsöffnung 8 einen Dichtkonus hat, während am Führungszapfen 7 des Schließkörpers 5 ein komplementär geformter kegelförmiger Teilbereich 25 vorgesehen ist. Der Dichtkonus 24 der Führungsöffnung 8 und der komplementär geformte Teilbereich 25 des Führungszapfens 7 beaufschlagen sich in der in Figur 1 dargestellten Offenstellung des Schließkörpers 5 derart, daß unerwünschte Flüssigkeitsströme durch die Führungsöffnung 8 vermieden werden können.

In Figur 4 ist dargestellt, daß der die am Aufsteckansatz 18 des Reglerkerns 9 vorgesehene Ringnut 21 begrenzende äußere Nutrand zur Sicherung des Regelkörpers 10 nach außen gebogen ist. Diese Umbiegung des äußeren Nutrandes kann durch eine thermische und/oder mechanische Einwirkung auf den Nutrand erfolgen.

Die hier dargestellte Einsetzpatrone 1 zeichnet sich durch ihre kompakte Ausgestaltung aus, die auch die Reihenschaltung von zwei dieser Einsetzpatronen 1 erlaubt, sofern aus Sicherheitsgründen zwei in gleicher Durchströmrichtung wirksame Rückflußverhinderer 3 vorgeschrieben sind.

## Patentansprüche

1. Einsetzpatrone (1) zum Einsetzen in eine Flüssigkeitsleitung, die in ihrem Patronengehäuse (2) wenigstens einen Rückflußverhinderer (3) und abströmseitig zumindest einen Durchflußmengenregler (4) aufweist, wobei der Rückflußverhinderer (3) einen Schließkörper (5) hat, der in seiner Schließstellung an einem Ventilsitz (6) des Patronengehäuses (2) dicht anliegt und von dieser Schließstellung gegen eine Rückstellkraft in eine Offenstellung bewegbar ist, wobei am Schließkörper (5) ein abströmseitiger Führungszapfen (7) vorsteht, der in der Führungsöffnung (8) eines zentralen Reglerkerns (9) des Durchflußmengenreglers (4) geführt ist und wobei der Durchflußmengenregler (4) einen den Reglerkern (9) umgreifenden Regelkörper (10) aus elastischem Material aufweist, der auf einer Ringschulter (11) oder dergleichen Regelkörper-Träger aufliegt und zwischen sich (10) und einer gegenüberliegenden Umfangswand einen sich druckabhängig verändernden Steuerspalt (12) begrenzt, **dadurch gekennzeichnet, daß** der Durchflußmengenregler (4) etwa bündig mit der Abströmseite des Patronengehäuses (2) abschließt und daß dazu die Ringschulter (11) oder dergleichen am Reglerkern (9) vorsteht und der Steuerspalt (12) zwischen dem Regelkörper (10) und der Innenseite der Patronengehäuse-Umfangswand vorgesehen ist.

2. Einsetzpatrone nach Anspruch 1, **dadurch gekennzeichnet, daß** die Patronengehäuse-Umfangswand im Bereich des Durchflußmengenreglers (4) einstückig mit dem Reglerkern (9) verbunden ist.

3. Einsetzpatrone nach Anspruch 1 oder 2, **dadurch gekennzeichnet, daß** die am Reglerkern (9) gehaltene Ringschulter (11) über Verbindungsstege (15) mit der Patronengehäuse-Umfangswand verbunden ist.

4. Einsetzpatrone nach einem der Ansprüche 1 bis 3, **dadurch gekennzeichnet, daß** das Patronengehäuse (2) zumindest zweiteilig ausgestaltet ist und im Bereich des Durchflußmengenreglers (4) ein napfartiges Gehäuseteil (16) aufweist, das (16) mit einem zuströmseitig benachbarten Gehäuseteil (17) verrastbar oder dergleichen lösbar verbindbar ist.

5. Einsetzpatrone nach einem der Ansprüche 1 bis 4, **dadurch gekennzeichnet, daß** der Reglerkern (9) einen dem lichten Innendurchmesser des Regelkörpers (10) etwa entsprechenden Außendurchmesser hat.

6. Einsetzpatrone nach einem der Ansprüche 1 bis 5, **dadurch gekennzeichnet, daß** an der Innenseite der Patronengehäuse-Umfangswand in Umfangsrichtung zueinander beabstandete und in Durchflußrichtung orientierte Regulieraus- und/oder - einformungen (14, 13) vorgesehen sind.

7. Einsetzpatrone nach einem der Ansprüche 1 bis 6, **dadurch gekennzeichnet, daß** der Reglerkern (9) einen Aufsteckansatz (18) für eine den Schließkörper (5) in Schließrichtung beaufschlagende Rückstellfeder (19) aufweist, und daß der Aufsteckansatz (18) zur Aufnahme, zumindest eines Großteils der Druckfeder (19) in Spannlage bemessen ist.

8. Einsetzpatrone nach einem der Ansprüche 1 bis 7, **dadurch gekennzeichnet, daß** der Schließkörper (5) abströmseitig eine Ringnut (20) zur Aufnahme des einen Endes der Druckfeder (19) aufweist.

9. Einsetzpatrone nach einem der Ansprüche 1 bis 8, **dadurch gekennzeichnet, daß** der Schließkörper (5) im Dichtbereich eine Ringnut (22) mit einem darin eingesetzten Dichtring (23) aufweist und daß der Ventilsitz (6) sich in Schließrichtung vorzugsweise konisch verjüngt.

10. Einsetzpatrone nach einem der Ansprüche 1 bis 9, **dadurch gekennzeichnet, daß** das gegebenenfalls mehrteilige Patronengehäuse (2) und/oder der Schließkörper (5) aus Kunststoff bestehen und Spitzgießteile sind.

11. Einsetzpatrone nach einem der Ansprüche 1 bis 10, **dadurch gekennzeichnet, daß** der dem Schließkörper (5) zugewandte Randbereich (24) der Führungsöffnung (8) einen Dichtkonus hat, und daß am Führungszapfen (7) des Schließkörpers (5) ein komplementär geformter kegelförmiger Teilbereich (25) vorgesehen ist, die (24, 25) sich in Offenstellung des Schließkörpers (5) dichtend beaufschlagen.

12. Einsetzpatrone nach einem der Ansprüche 1 bis 11, **dadurch gekennzeichnet, daß** am Aufsteckansatz (18) des Reglerkerns (9) eine Ringnut (21) zur Aufnahme des anderen Endes der Druckfeder (19) vorgesehen ist, und daß der äußere Nutrand (26) zur Sicherung des Regelkörpers (10) auf dem Reglerkern (9) nach außen gebogen oder abgewinkelt ist.

## Claims

1. Cartridge insert (1) for insertion in a fluid line, which comprises, within its cartridge housing (2) at least one back flow inhibitor (3) and downstream at least one flow regulator (4), the back flow inhibitor (3) having a closing body (5) which, in its closed position, fits tightly against a valve seat (6) of the cartridge housing and can be displaced from this closed position counter to a resetting force into an open position, while projecting from the closing body (5) is a downstream guide pin (7) which is guided in the guide opening (8) of a central regulator core (9) of the flow regulator (4), the flow regulator (4) comprising a regulating body (10) made of an elastic material surrounding the regulator core (9), resting on an annular shoulder (11) or similar regulator body carrier and defining between itself (10) and an opposing enclosing wall, a control gap (12) which varies with the pressure, **characterised in that** the flow regulator (4) terminates substantially flush with the downstream side of the cartridge housing (2) and for this purpose the annular shoulder (11) or the like projects from the regulator core (9) and the control gap (12) is provided between the regulator body (10) and the inside of the outer wall of the cartridge housing.

2. Cartridge insert according to claim 1, **characterised in that** the outer wall of the cartridge housing is integrally connected to the regulator core (9) in the region of the flow regulator (4).

3. Cartridge insert according to claim 1 or 2, **characterised in that** the annular shoulder (11) held on the regulator core (9) is connected to the outer wall of the cartridge housing via connecting webs (15).

4. Cartridge insert according to one of claims 1 to 3, **characterised in that** the cartridge housing (2) is constructed in at least two parts and comprises, in the region of the flow regulator (4), a well-like housing part which is latchable or similarly releaseably connectable to an adjacent housing part (17) on the upstream side.

5. Cartridge insert according to one of claims 1 to 4, **characterised in that** the regulator core (9) has an outer diameter substantially corresponding to the clear internal diameter of the regulating body (10).

6. Cartridge insert according to one of claims 1 to 5, **characterised in that** regulating projections and/or indentations (14, 13) spaced from one another in the circumferential direction and oriented in the direction of flow are provided on the inside of the outer wall of the cartridge housing.

7. Cartridge insert according to one of claims 1 to 6, **characterised in that** the regulator core (9) comprises a push-on attachment (18) for a recoil spring (19) acting upon the closing body (5) in the closing direction, and **in that** the push-on attachment (18) is of such dimensions that it is able to accommodate at least the majority of the compression spring (19) in the position of tension.

8. Cartridge insert according to one of claims 1 to 7, **characterised in that** the closing body (5) comprises downstream an annular groove (20) for accommodating one end of the compression spring (19).

9. Cartridge insert according to one of claims 1 to 8, **characterised in that** the closing body (5) comprises, in the sealing area, an annular groove (22) having a gasket ring (23) inserted therein and **in that** the valverseat (6) tapers, preferably conically, in the closing direction.

10. Cartridge insert according to one of claims 1 to 9, **characterised in that** the cartridge housing (2) which is optionally in several parts and/or the closing body (5) consist of plastics and are injection moulded parts.

11. Cartridge insert according to one of claims I to 10, **characterised in that** the edge portion (24) of the guide opening (8) facing the closing body (5) has a sealing cone and **in that** a conical portion (25) of complementary shape is provided on the guide pin (7) of the closing body (5), the components (24, 25) meeting to form a seal in the open position of the closing body (5).

12. Cartridge insert according to one of claims 1 to 11, **characterised in that** on the push-on attachment 18 of the regulator core (9) is provided an annular groove (21) for accommodating the other end of the compression spring (19), and **in that** the outer edge (26) of the groove is bent or angled outwards in order to secure the regulating body (10) on the regulator core (9).

## Revendications

1. Cartouche (1) destinée à être insérée dans une conduite de liquide, qui comporte dans son boîtier de cartouche (2) au moins un clapet de non-retour (3) et du côté sortie au moins un régulateur de débit (4), dans laquelle le clapet de non-retour (3) a un corps de fermeture (5) qui repose de manière étanche dans sa position de fermeture contre un siège de soupape (6) du boîtier de cartouche (2) et est mobile à partir de cette position de fermeture jusqu'à une position d'ouverture en s'opposant à une force de rappel, un tourillon de guidage (7) situé du côté sortie fait saillie sur le corps de fermeture (5) et est guidé dans l'ouverture de guidage (8) d'un noyau central (9) du régulateur de débit (4) et le régulateur de débit (4) comporte un corps de régulation (10) réalisé dans un matériau élastique, entourant le noyau du régulateur (9), qui repose sur un épaulement annulaire (11) ou support de corps du régulateur similaire et délimite entre lui (10) et une paroi périphérique opposée un interstice de commande (12) variant en fonction de la pression, **caractérisé en ce que** le régulateur de débit (4) se termine à peu près à fleur du côté sortie du boîtier de cartouche (2) et que, à cet effet, l'épaulement annulaire (11) ou similaire fait saillie sur le noyau du régulateur (9) et l'interstice de commande (12) est prévu entre le corps de régulation (10) et la face intérieure de la paroi périphérique du boîtier de cartouche.

2. Cartouche selon la revendication 1, **caractérisée en ce que** la paroi périphérique du boîtier de cartouche est reliée d'un seul tenant au noyau du régulateur (9) dans la zone du régulateur de débit (4).

3. Cartouche selon la revendication 1 ou 2, **caractérisée en ce que** l'épaulement annulaire (11) tenu sur le noyau de régulateur (9) est relié à la paroi périphérique du boîtier de cartouche par l'intermédiaire de barrettes de liaison (15).

4. Cartouche selon l'une quelconque des revendications 1 à 3, **caractérisée en ce que** le boîtier de cartouche (2) est conçu au moins en deux parties et comporte, dans la zone du régulateur de débit (4), une partie de boîtier en forme de cuvette (16) qui peut être reliée avec une partie de boîtier voisine côté entrée (17) de manière encliquetable ou séparable de façon similaire.

5. Cartouche selon l'une quelconque des revendications 1 à 4, **caractérisée en ce que** le noyau de régulateur (9) a un diamètre extérieur correspondant à peu près au diamètre intérieur du corps de régulation (10).

6. Cartouche selon l'une quelconque des revendications 1 à 5, **caractérisée en ce que** des déformations de régulation en creux et/ou en bosse (14, 13), distantes les uns des autres dans la direction circonférentielle et orientées dans la direction d'écoulement, sont prévues sur la face intérieure de la paroi périphérique du boîtier de cartouche.

7. Cartouche selon l'une quelconque des revendications 1 à 6, **caractérisée en ce que** le noyau du régulateur (9) comporte une saillie d'emboîtement (18) pour un ressort de rappel (19) comprimant le corps de fermeture (5) dans la direction de fermeture et que la saillie d'emboîtement (18) est dimensionnée pour recevoir au moins une grande partie du ressort de pression (19) quand il est bandé.

8. Cartouche selon l'une quelconque des revendications 1 à 7, **caractérisée en ce que** le corps de fermeture (5) comporte, du côté sortie, une rainure annulaire (20) pour recevoir une extrémité du ressort de pression (19).

9. Cartouche selon l'une quelconque des revendications 1 à 8, **caractérisée en ce que** le corps de fermeture (5) comporte, dans la zone d'étanchéité, une rainure annulaire (22) avec une bague d'étanchéité (23) qui y est insérée et que le siège de soupape (6) se rétrécit de préférence en forme de cône dans la direction de fermeture.

10. Cartouche selon l'une quelconque des revendications 1 à 9, **caractérisée en ce que** le boîtier de cartouche (2) éventuellement en plusieurs parties et/ou le corps de fermeture (5) sont réalisés en matière plastique et sont des pièces moulées par injection.

11. Cartouche selon l'une quelconque des revendications 1 à 10, **caractérisée en ce que** la zone de bordure (24) de l'ouverture de guidage (8) orientée vers le corps de fermeture (5) a un cône d'étanchéité et qu'il est prévu, sur le tourillon de guidage (7) du corps de fermeture (5), une zone partielle (25) en forme de cône complémentaire, les deux cônes (24, 25) appuyant l'un sur l'autre dans la position d'ouverture du corps de fermeture (5) en formant étanchéité.

12. Cartouche selon l'une quelconque des revendications 1 à 11, **caractérisée en ce qu'**il est prévu, sur la saillie d'emboîtement (18) du noyau du régulateur (9), une rainure annulaire (21) destinée à recevoir l'autre extrémité du ressort de pression (19) et que le bord de rainure extérieur (26) est recourbé ou plié vers l'extérieur pour bloquer le corps de régulation (10) sur le noyau du régulateur (9).
